# EUROPEAN PATENT APPLICATION

(11) **EP 2 332 786 A1**
(43) Date of publication of application: **15.06.2011**
(21) Application number: 10194463.5
(22) Date of filing: 10.12.2010
(51) Int. Cl.: B60R 22/14, B60R 22/10

(54) **Harness**

(30) Priority: 11.12.2009 GB 0921704
(71) Applicant: Klappa, Angela, Wickhambreaux Canterbury Kent CT3 1SG (GB); Klappa, Peter, Wickhambreaux Canterbury Kent CT3 1SG (GB)
(72) Inventor: Klappa, Angela, Wickhambreaux Canterbury Kent CT3 1SG (GB); Klappa, Peter, Wickhambreaux Canterbury Kent CT3 1SG (GB)
(74) Representative: Ertl, Nicholas Justin

(57) **Abstract**

A fitting (5) for a child's safety-harness (8) having two shoulder straps (80). Each shoulder strap (80) includes a chest portion arranged to retain a child when the harness is in a closed configuration. The fitting comprises: two arm-loops, each attachable to a respective shoulder strap, where in normal use each arm- loop passes behind a shoulder and under an arm of the child, thereby impeding removal of the shoulder strap by the child passing a hand behind the chest portion of the strap when the harness is in the closed configuration. The fitting is adapted so as not to impede removal of the child from the harness, when the harness is in an open configuration.

## Description

This invention relates to safety harnesses for children. It is particularly relevant to child restraints for vehicles.

There are many situations in which young children need to be carefully restrained for their own safety. One very important example of such circumstances is when a child needs to travel in a car or other vehicle. Integral seat-belts are usually provided in cars, to restrain adults in the event of a collision or under sudden braking. Such seat belts are not suitable for young children, who are instead commonly restrained in a harness fitted to a child car seat. Such car-seat and associated harness arrangements are known collectively as child restraints. The child-seat is installed in a passenger seat (usually a rear passenger seat) in the car. The child is then buckled into the child-seat using the harness.

Typically, the harness in such a child restraint has two shoulder straps which are fixed to, or threaded through, the back of the child seat. From here the shoulder straps pass over the shoulders of the child and down the chest. They terminate in a buckle, or other releasable fixture, located just above the level of the hips, when the child is seated in the child-seat. Usually a lap strap and crotch strap are also provided, again terminating at the buckle. Thus, a five point harness is provided. The buckle is released to allow access for the child into and out of the child seat, and fastened to secure the child.

In many countries, the use of suitable child restraint systems is mandated and regulated by law. In Europe, for example, child restraints are governed by Regulation No 44 of the Economic Commission for Europe of the United Nations (UN/ECE) ― "Uniform provisions concerning the approval of restraining devices for child occupants of power driven vehicles".

When properly used, the conventional child restraint secures a child and limits movement in the event of an accident or other sudden acceleration. The shoulder straps prevent the child from being ejected from the seat upwards or forwards; the crotch strap prevents the child from slipping forwards under the buckle and the lap straps provide lateral support.

However, the conventional child restraint can only fulfil its function when the harness is worn properly by the child.

According to an aspect of the current invention, there is provided a fitting for a child's safety-harness having two shoulder straps, each strap including a chest portion arranged to retain a child when the harness is in a closed configuration, the fitting comprising: two arm-loops, each attachable to a respective shoulder strap, where in normal use each arm-loop passes behind a shoulder and under an arm of the child, thereby impeding removal of the shoulder strap by the child passing a hand behind the chest portion of the strap when the harness is in the closed configuration, the fitting being adapted so as not to impede removal of the child from the harness, when the harness is in an open configuration.

The present inventors have recognised that children wearing conventional harnesses do not always comply with instructions to wear the harness correctly. In particular, a child can learn to partially escape from the harness, by sliding first his/her hand and then an arm inside (that is, behind) the shoulder strap where it passes in front of the chest. This can allow the child to slip the shoulder strap off the shoulder. If both shoulder straps are removed in this way, the child will only be effectively restrained from the waist (by the lap strap and crotch strap, if present). This is inherently dangerous and could even result in the child completely escaping or being ejected from the child restraint.

The present invention improves on the basic safety harness, by providing two arm-loops. Each arm loop can be attached to one of the shoulder straps. In use, the child puts an arm through each of the loops when entering the harness. Thereafter - once the harness has been fastened in the normal manner (for example, by closing a buckle) ― it should be more difficult for the child to escape from the harness by slipping off a shoulder strap. Even if the child inserts a hand and arm behind the chest portion of the shoulder strap, the arm-loop remains on the shoulder, and continues to provide a restraining function. The size and position of the arm-loop has an impact on the effectiveness of the improved harness. The loop should ideally fit closely around the shoulder and/or arm of the child. If the loop is too large (with due regard to its position), the child may be able to fit its hand into the loop, in the same way it would try to escape from the conventional shoulder strap. If the loop is too small, the child may be uncomfortable, or the loop may cease to fit as the child grows. The fitting can be attached to a conventional harness and then left in place during use. The child can enter or exit the seat and harness in the usual way, with the condition that, when entering the harness, the arms are inserted through the arm loops. Removing the child from the harness (by opening the buckle) is as quick and as easy as removal from a conventional harness - that is, the fitting of the present invention creates no additional obstacle or complexity when removing the child.

Preferably, the arm-loops comprise: first and second breast portions defining a chest opening between them, and each comprising attachment means adapted to attach the fitting to one of the shoulder straps; and first and second shoulder portions, each opposing a respective breast portion and meeting it at upper and lower points to define an armhole, such that, in normal use the child's arms pass through the armholes.

The breast portions may comprise the means of attachment of the fitting to the standard harness. This can allow the arm loops to be defined in suitable positions. The opening defined by the arm-loop is an armhole. To ensure that the function, and therefore safety, of the harness is not compromised, the shoulder straps should not be pushed or pulled out of place by the attachment of the fitting. Suitable example attachment means will be readily apparent to one skilled in the art.

Preferably each breast portion and its corresponding shoulder portion extend further below the armhole, to meet at a side portion of the fitting; and the attachment means extends along a length of the chest portion of the shoulder strap such that, in normal use, the breast portion is attached to the shoulder strap along said length, thereby forming a barrier which prevents the child from passing a hand behind the chest portion of the strap.

This provides a full barrier, which extends laterally from the chest portion of the shoulder strap, around the torso of the child, at least to the child's side (that is, under the arm). This makes it more difficult for the child to slide a hand under the shoulder strap in front of its chest.

The attachment means may be adapted to be removable from the harness.

This provides a fitting which can be attached and detached from any suitable child safety-harness. Thus, for example, the fitting can be used in a car seat, when the child is travelling in the car, but might also be used in a push-chair or buggy when the child is using that. Note that push-chairs or buggies often feature a similar kind of harness to the conventional car child-restraint, and the invention is no less applicable to these harnesses. The attachment means should be attachable and detachable by an adult, but preferably difficult for a child to detach, especially when seated in the closed harness.

The attachment means are preferably attachable to a bight of the shoulder strap. This means that the fitting can be attached (and, optionally, detached) without needing to thread the strap through the attachment means. This is useful because it may be desired to fit the product to an existing safety harness in which the shoulder straps are formed as a closed loop - for example, if the strap is attached permanently or semi-permanently to the child-seat at both ends. In this case, it may not be possible to thread a free end of the strap through the attachment means. Preferably, therefore, the attachment means include a closable fastening, for attachment around a strap of an existing child safety harness.

The fitting preferably also comprises a back portion, joining the first and second shoulder portions.

This connection between the two arm-loops, behind the back of the child, eliminates a further degree of freedom. When the shoulder portions are connected in this way, it becomes more difficult for the child to remove one of the arms-loops while seated. One arm-loop can no longer be slipped off the shoulder independently of the other, since the connection with the opposite arm-loop provides tension to hold the loop up on the shoulder, in its intended place. Nonetheless, it is still easy to remove the child from the harness in the usual way, simply by releasing the buckle (or other fastening) and pulling the child free.

The fitting may comprise a waistcoat, attachable at its lapels to the shoulder straps.

This provides one attractive and advantageous embodiment of this aspect of the invention.

Optionally, at least the back portion comprises high-visibility material.

This is beneficial as the fitting can be worn independently by the child as an article of clothing, when the fitting is not installed (that is attached) to a harness. For example, in the case of a child-restraint in a car: in the event of a breakdown, the fitting can be detached from the harness and the child removed from the child-restraint, still wearing the fitting. The high-visibility material then enhances the safety of the child outside the vehicle. However, in the event of an accident, or other emergency, the child can always be extracted quickly from the harness, by leaving the fitting in place, attached to the harness.

The attachment means may be further adapted to be attachable to one another across the chest opening when the fitting is worn by the child independently of the safety harness.

In this way, the left and right attachment means can be attached to one another, thus closing the fitting across the chest of the child. The fitting is then worn like a jacket and cannot easily fall off the child. This may be useful, for example, in the case described above, where the fitting also fulfils a safety function outside of a vehicle (by having high-visibility parts). Equally, the fitting may additionally keep the child warm outside the vehicle.

Each arm-loop may comprise an adjustable portion, so as to vary the aperture of the armholes.

To ensure the effective operation of the fitting, it is desirable that the size of the arm-hole, defined by each arm-loop, matches the size of the child's arm and/or shoulder closely. If the aperture is too large, the child may be able to escape from the shoulder strap, as from the conventional harness. If the aperture is too small, the child may be uncomfortable and there may be difficulty installing the child in, and extracting him/her from, the harness. Nonetheless, children differ in shape and size, and all grow quickly. Therefore, it is advantageous if the effective size of the arm loop can be adapted to suit different children, or suit a given child over time as it grows. It is particularly beneficial if the adjustable portion is shielded from tampering by the child. For example, the adjustable portion may comprise adjustment means which are only accessible from the inside of the fitting, such that adjustment is only possible when the harness is open, or indeed, when the fitting is removed from the harness.

Preferably, the circumference of the arm-hole is less than 40cm, more preferably less than 30cm. This provides a good balance between comfort and the need to prevent escape from the harness, for a child of average size and build.

The fitting may further comprise a sleeve extending from each arm-loop, in normal use extending along the child's arm.

With this variation, the sleeve can cooperate with the armhole to prevent the child inserting a hand through the arm-loop. Since the sleeve extends some distance down the child's arm, the aperture of the armhole itself is less important to the function of the fitting, because the child must bend its arm back up the sleeve in order to gain access for a hand through the armhole. Therefore, the presence of a sleeve can relax to some extent the requirement for a tightly fitting armhole.

According to another aspect of the invention, there is provided a safety-harness for a seat for a child, comprising: two shoulder straps, each including a chest portion arranged to retain the back of the child against the seat when the harness is in a closed configuration, the harness further comprising; two arm-loops, each attached to a respective shoulder strap, in normal use each arm-loop passing behind a shoulder and under an arm of the child, thereby impeding removal of the shoulder strap by the child passing a hand behind the chest portion of the strap when the harness is in the closed configuration, the arm-loops being adapted so as not to impede removal of the child from the harness, when the harness is in an open configuration.

Preferably, this is a multipoint harness (more preferably, a five-point harness). Preferably, the harness comprises means for releasing the child which enable the child to be removed in a single action. For example, a single buckle, which when unfastened allows removal of the child.

This aspect of the invention can achieve improvements over conventional harnesses by effectively providing a fitting, such as the one described above, as an integral part of the safety-harness.

According to still another aspect of the invention, there is provided a seat for a child including the safety-harness.

The seat may comprise a child car-seat or any other type of child-seat, such as that of a buggy or push-chair.

The invention will now be described by way of example with reference to the accompanying drawings, in which:
Figure 1 shows a fitting according to an embodiment of the invention, in use by a child secured in a safety-harness;
Figure 2 shows a frontal view of the fitting of Fig. 1 without the child or harness;
Figure 3 illustrates how the fitting attaches to the shoulder straps of a harness, according to an embodiment;
Figure 4 shows detail of an arm-loop of a fitting according to an embodiment;
Figure 5 shows a view of the back of the fitting of Fig. 2; and
Figure 6 shows a fitting according to another embodiment.

Note that the drawings are for illustrative purposes only and are not drawn to scale. Relative dimensions are contracted or exaggerated for clarity of illustration. Like features are given the same reference numeral throughout.

The present inventors have recognised that some children discover how to slip off the shoulder strap of a conventional safety harness. They do this by sliding a hand and arm under or behind the strap. Once a child learns how to do this, it becomes very difficult to ensure that they remain properly strapped into the harness at all times. Whereas it may be possible to reason with an older child that what they are doing is unsafe, this may not be a practical approach for younger children, who are often less compliant. In this case, the only way to ensure that the child cannot escape from the harness may be to tighten the straps to such an extent that it is impossible for the child to place its arm through the strap. However, this may not be possible without causing distress or discomfort.

Furthermore, no matter how tight the shoulder strap, the child will almost always be able to insert at least fingers or a hand under the strap. Although not able to slip the strap off its shoulder, the child will still be using the harness incorrectly, and the fingers or hand trapped behind the shoulder strap may be at risk of injury, in the event of an accident.

If the driver of the car notices the child wearing the harness incorrectly or partially escaping from it, the immediate natural instinct is to rearrange the harness on the child. However, this is at best an unwelcome and potentially dangerous distraction. At worst, the concerned, distracted driver may try to reach over to the child to solve the problem directly, while the vehicle is moving at speed - placing both of them, as well as other road users, in danger.

The current invention seeks to provide a safe and comfortable way to prevent children from misusing a safety-harness in the ways mentioned above. The invention is thought to be particularly relevant to safety-harnesses used in child-restraints in vehicles; but its range of application is not so limited. Any harness of a similar type - having two shoulder straps to restrain a child - can benefit from the concept of the invention.

UN/ECE Regulation No. 44 defines child restraints for vehicles with reference to five mass groups. Group I is for children of mass between 9kg and 18kg. Manufacturers and retailers sometimes refer to this category of child restraint as "Stage 1". The present invention is particularly relevant to child seats for this category.

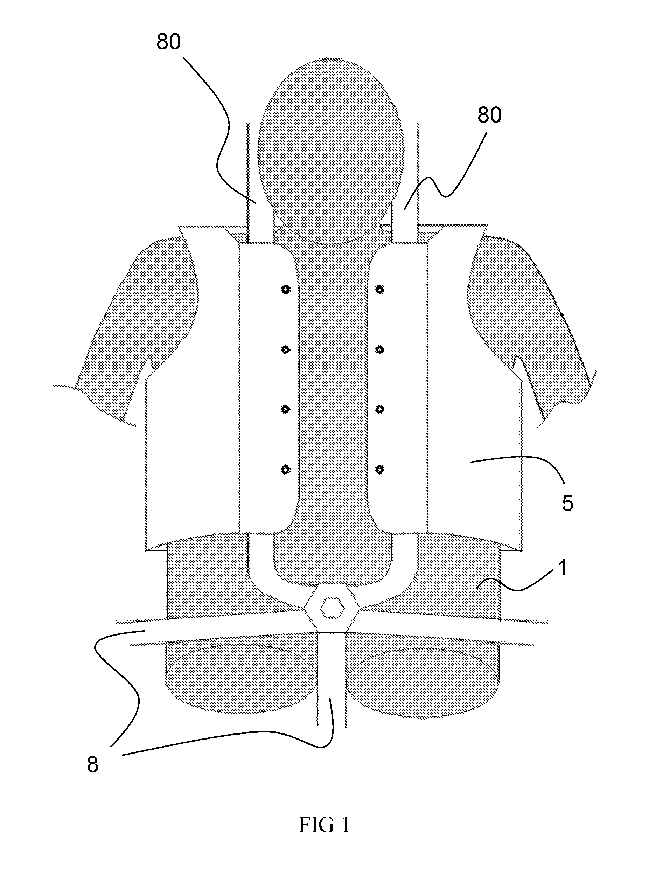

Fig. 1 is a schematic illustration of a child 1 sitting in a seat, restrained by a harness 8. The harness 8 has been adapted by the attachment of a fitting 5 according to an embodiment of the invention. In this embodiment, the fitting 5 comprises a waistcoat, attached to the shoulder straps 80 of the harness 8.

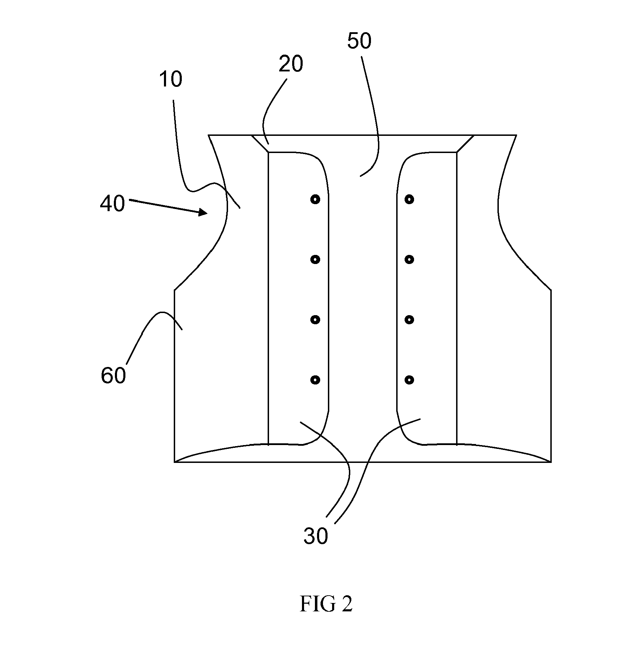

The fitting 5 is shown again in isolation in Fig. 2 (also a frontal view). The waistcoat comprises a breast portion 10 and a shoulder portion 20. The breast portion 10 forms the front part of a loop around the shoulder and the shoulder portion 20 completes this loop. The loop defines an armhole 40. Below the armhole is a side portion 60 of the waistcoat. Note that, in this embodiment, the left and right sides of the waistcoat are substantially symmetric. Therefore, the parts described are mirrored to provide left and right armholes. The back 50 of the waistcoat joins the left and right shoulder portions 20 together. At the front of the waistcoat, attachment means 30 are provided, which enable the breast portions 10 (and thus the arm-loops) to be connected to the shoulder straps 80 of the conventional safety harness.

In use, as shown in Fig. 1, the child's arms go through the armholes. The loop of material formed by the breast portion 10 and the shoulder portion 20 has the effect of securing the child's shoulder to the shoulder strap, because the attachment means 30 on the breast portion 10 are attached to the straps. In the embodiment shown, the attachment means extend down along the length of a chest portion of the shoulder straps 80. However, even without this feature, the provision of arm-loops around the child's shoulders, attached to the shoulder strap, will hinder the child if it tries to slip the strap off the shoulder.

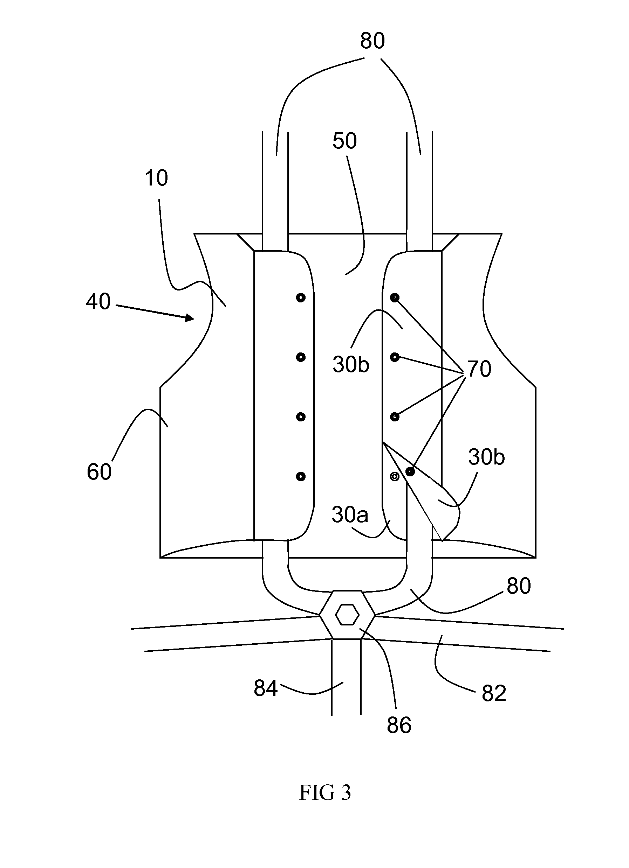

Fig. 3 shows the fitting 5 in place on a harness (but without the child). A typical conventional Group I harness has two shoulder straps that descend to a buckle 86 or other fastener. The buckle 86 is positioned in front of the child's abdomen. A lap strap 82 is usually provided, which also joins to the buckle 86. Finally, a crotch strap 84 is shown. This descends from the buckle to the base of the seat, between the child's legs. It is an important requirement of the safety harness that it can be released easily in the event of an emergency. Thus, the buckle must be simple and quick to open. Furthermore, it should be possible to release the child from the restraint by a single operation on this single buckle (indeed this is a requirement, for example, of Regulation 44, referred to above).

The current invention provides improvements to the conventional safety-harness without compromising any aspect of the safety or convenience of the harness or overall child-restraint. In particular, the child can still be released from the harness by a single action on the single conventional buckle. In the present embodiment this is achieved by leaving the chest of the waistcoat open. In other words, there is no material or other obstacle joining the shoulder straps 80 together, across the chest-gap at the front of the child.

Fig. 3 shows one exemplary embodiment of the attachment means 30 in greater detail. According to this embodiment, the attachment means 30 comprise two flaps in the breast portion 10 of the fitting: a back flap 30a which passes behind the shoulder strap 80; and a front flap 30b which passes over the front of the strap. The two flaps are fixed in position around the strap by joining them together, to form a sleeve. As illustrated in Fig. 3, in the present embodiment this fixing is achieved by press-studs 70. The drawing shows one of the front flaps 30b folded back at its bottom corner, revealing the passage of the shoulder strap 80 between the two flaps.

As will be readily apparent, this means of attachment of the fitting is just one of a wide range of suitable examples. Clearly, it is not essential that two flaps are used to attach the fitting to each shoulder strap. Likewise, many other methods can be used to fix the attachment in place. For example, the attachment means could comprise one or more flaps including a "hook-and-loop" type fastening (such as Velcro®), which wrap around the shoulder strap in a manner similar to that shown in Fig. 3. Other examples may include button-based fastening, and zip-based fastening, among others.

The skilled person will also be well aware that fastenings of different types may be combined to improve the security of the attachment, and prevent tampering by the child. For example, a primary fastening (such as press-studs) might be concealed from the child by a shield, potentially including a secondary fastening. For example, press-studs may be concealed, in use, by a cover. Such a cover can be formed by a flap which attaches to the inside (or underside) of the fitting via a hook-and-loop fastener and is therefore inaccessible to the child when the harness is closed. In such a configuration, the secondary fastening (hook-and-loop) does not need to bear the burden of attaching the fitting to the shoulder strap, as this can still be borne by the primary fastening (press-studs).

Preferably, the breast portion and attachment means cooperate to provide a continuous barrier which prevents the child sitting in the harness from inserting its hand behind the shoulder strap 80. This is achieved in the present embodiment by the flaps 30a and 30b completely enclosing the shoulder straps 80 along a substantial part of chest (that is, from below the shoulder to above the waist). The flaps meet the breast portion 10 of the waistcoat, which in turn meets the shoulder 20 or back 50 portions of the waistcoat where they descend below the armhole. In this way, the child's access to the shoulder strap is significantly limited.

If the armholes provided by the fitting 5 are too large, the problems of prior-art harnesses may be re-introduced - that is, when the harness is closed, a child may be able to insert its hand and arm back in through the armhole and once again slip the shoulder strap off its shoulder. It is therefore advantageous that the armholes should be as small a possible - accommodating the child's arm in normal use, but preventing the child from inserting its hand back through the armhole. Of course, different children with a range of different armsizes must be accommodated. Indeed, to accommodate a single child over time as it grows, the change in size of hands and arms must be taken into account.

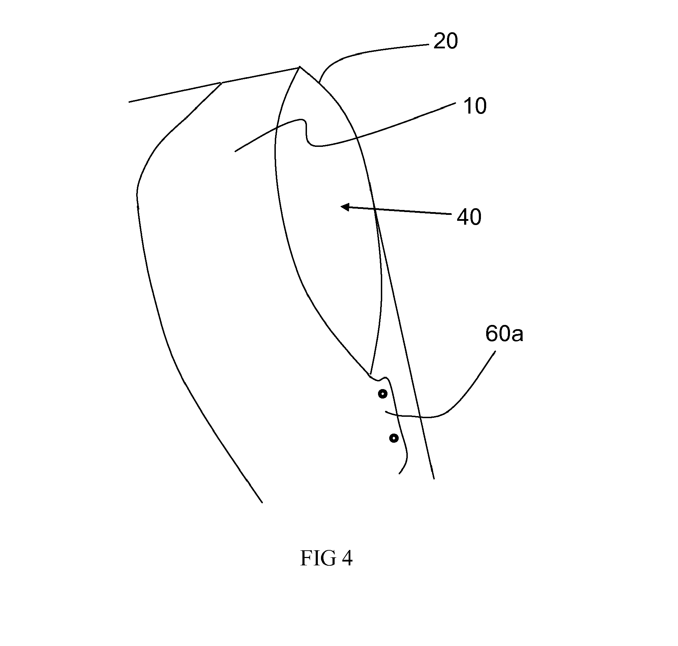

Preferably, therefore, the arm loop includes some means for varying the size of the armhole. One example of such means is shown in Fig. 4, which shows detail of the side 60 and armhole 40 of a fitting according to an embodiment. Below the armhole, at the side portion 60 of the fitting, means for varying the aperture of the armhole are provided, in the form of two press studs 60a. When these press studs are closed, the armhole has its minimum size. To enlarge the armhole, the press studs 60a can be undone.

Of course, as will be readily apparent to one skilled in the art, the studs 60a are not the only suitable means of adapting the size of the arm-loops and armholes 40. For example, the variation could be provided by other similar releasable fixtures, such as buttons, or indeed by a continuously variable adjustment means, such as a strap which can be lengthened or shortened as desired. As a further alternative example, the variation could be achieved by providing an elasticated section at some point in the arm-loop.

In the embodiments described above, the attachment means attaching the fitting 5 to the safety-harness 8 are releasable. This can enable one fitting to be used with different harnesses, or can enable different children to have different fittings (for example, individually sized) for the same harness. Note that, although the fitting is releasable from the harness, it is not intended or necessary that the fitting should be removed from the harness in order to release the child. This would be a significant inconvenience and would be contrary to safety regulations such as Regulation 44, discussed above.

In some embodiments, as well as providing a releasable fitting, the fitting is also adapted to be worn by the child independently of the harness. This provides greater flexibility of use. The child can wear the fitting, for example, for warmth and/or for safety as discussed below. If the fitting is intended to be worn independently, it is beneficial that the attachment means 30 be further adapted to attach to one another across the child's chest, when the fitting is worn as a garment. This mutual attachment can be achieved in any suitable way. For example, the press studs 70 used to secure the attachment to the shoulder straps, may be arranged so that they can also be secured to corresponding press studs on the opposite breast portion of the waistcoat. Alternatively, additional press studs (or parts of press studs) may be provided for this purpose.

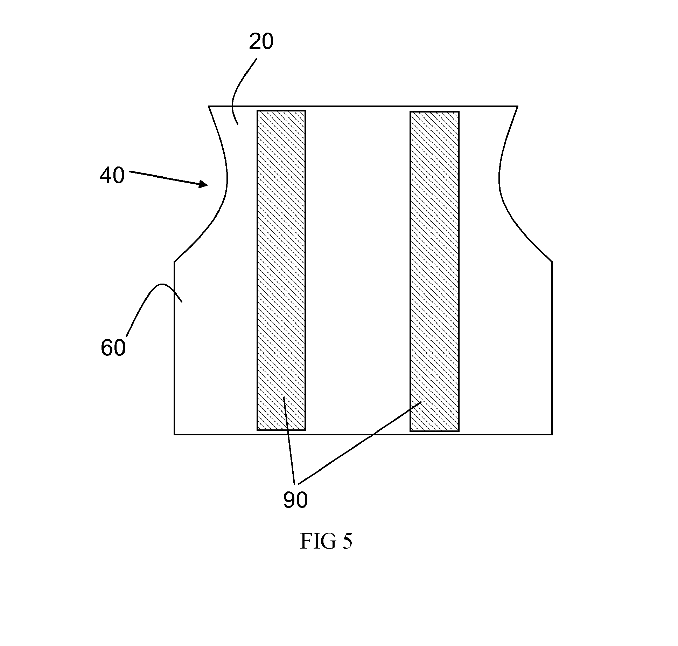

Fig. 5 is a drawing of the back of the fitting, related to the embodiment described above. The shoulder 20 and side 60 portions of the waistcoat, and the armholes 40, are indicated. This example also has two reflective, high-visibility strips 90. These strips are advantageous if the fitting is removable from the harness and is intended to be used in a vehicle. In the event of a breakdown, the child can be removed from the car seat still wearing the fitting as a garment. In this case, the reflective strips 90 on the back make the child easily visible at the roadside. Note, once again, that if urgent removal of the child is necessary in an emergency, the child can always be extracted from the harness in the usual manner by leaving the fitting in place, attached to the shoulder straps.

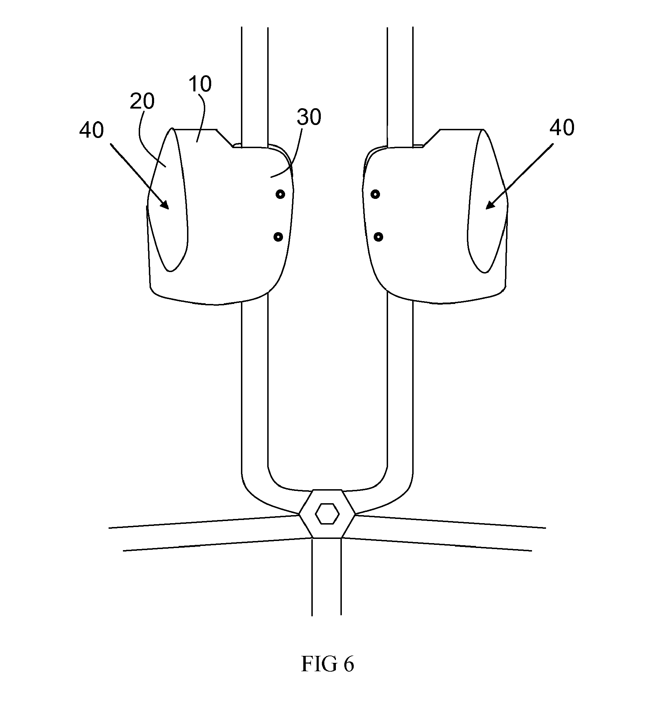

Fig. 6 illustrates a further embodiment of a fitting according to this aspect of the invention. The fitting of Fig. 6 is smaller and simpler than the previous embodiment. It includes arm-loops formed by breast portions 10 and shoulder portions 20, as before, defining armholes 40. However, it does not provide a "full" waistcoat, since the back is missing and the material of the breast 10 and shoulder 20 portions does not extend down around the abdomen of the child. Correspondingly, the attachment 30 to the shoulder straps extends only along a small part of the chest portion of the straps. This embodiment, comprising two separate arm-loops, may be lighter and may fit children of different sizes more easily. However, as noted already above, embodiments of this type will not necessarily prevent the child from inserting hands behind the lower portions of the chest straps. Nonetheless, even if the child inserts a hand in this way, it will still be difficult for him/her to slip the arm-loop ―and thus the should strap - off his/her shoulder.

The embodiments described above concern fittings which can be retrofitted to existing (for example, standard) child safety-harnesses. According to a further aspect of the invention, a similar fitting is provided in which some or all of the features of the fitting are integrated in the safety harness itself. This may have the advantage of simplicity - for example, if the fitting is fully integrated into the harness and not detachable. It may also have the advantage of better integration or ease of attachment - for example, if the shoulder straps of the harness are specially adapted to receive the attachment means of the fitting. In general, the features discussed above will be applicable to some, if not all, embodiments of this further aspect of the invention - as will be apparent to the skilled person. A harness according to an embodiment of this aspect provides the existing safety benefits of a conventional multi-point (for example, five-point) harness, but with the added security that it is more difficult for a child to escape from parts of the harness or otherwise use it incorrectly.

A fitting according to an embodiment of either aspect of the invention may be fabricated in a range of materials, as will also be apparent to the skilled person. Different types of materials will be appropriate in different circumstances. For example, more flexible and/or elastic materials may offer qualities such as improved comfort for the child, and they may correspondingly be less restrictive of the child's movement. On the other hand, with stiffer materials it may be possible to immobilise the child more fully and/or successfully provide the benefits of the invention with a smaller fitting (in terms of the area of material covering the child). For example, in the embodiment described above of a waistcoat, the material may be flexible, like an ordinary garment, since the waistcoat provides substantially complete coverage of the child's torso. Even in this embodiment, however, it may be beneficial if the attachment means are relatively more rigid, so as to provide secure and reliable connection to the shoulder straps (for example, to avoid twisting of the straps).

Various other modifications will be apparent to those skilled in the art.

## Claims

1. A fitting for a child's safety-harness having two shoulder straps, each strap including a chest portion arranged to retain a child when the harness is in a closed configuration, the fitting comprising:
two arm-loops, each attachable to a respective shoulder strap, where in normal use each arm-loop passes behind a shoulder and under an arm of the child, thereby impeding removal of the shoulder strap by the child passing a hand behind the chest portion of the strap when the harness is in the closed configuration,
the fitting being adapted so as not to impede removal of the child from the harness, when the harness is in an open configuration.

2. The fitting of claim 1, wherein the arm-loops comprise:
first and second breast portions defining a chest opening between them, and each comprising attachment means adapted to attach the fitting to one of the shoulder straps; and
first and second shoulder portions, each opposing a respective breast portion and meeting it at upper and lower points to define an armhole,
such that, in normal use the child's arms pass through the armholes.

3. The fitting of claim 2, wherein:
each breast portion and its corresponding shoulder portion extend below the armhole, and meet at a side portion of the fitting; and
the attachment means extends along a length of the chest portion of the shoulder strap such that, in normal use, the breast portion is attached to the shoulder strap along said length,
thereby forming a barrier which prevents the child from passing a hand behind the chest portion of the strap.

4. The fitting of claim 2 or claim 3, wherein the attachment means are adapted to be removable from the harness.

5. The fitting of any of claims 2 to 4, further comprising a back portion, joining the first and second shoulder portions.

6. The fitting of claim 5, comprising a waistcoat, attachable at its lapels to the shoulder straps.

7. The fitting of claim 5 or claim 6, wherein at least the back portion comprises high-visibility material.

8. The fitting of any of claims 5 to 7, wherein the attachment means are further adapted to be attachable to one another across the chest opening when the fitting is worn by the child independently of the safety harness.

9. The fitting of any preceding claim, wherein each arm-loop comprises an adjustable portion, so as to vary the aperture of the armholes.

10. The fitting of any preceding claim, further comprising a sleeve extending from each arm-loop, in normal use extending along the child's arm.

11. A safety-harness for a seat for a child, comprising:
two shoulder straps, each including a chest portion arranged to retain the back of the child against the seat when the harness is in a closed configuration, the harness further comprising;
two arm-loops, each attached to a respective shoulder strap, in normal use each arm-loop passing behind a shoulder and under an arm of the child, thereby impeding removal of the shoulder strap by the child passing a hand behind the chest portion of the strap when the harness is in the closed configuration,
the arm-loops being adapted so as not to impede removal of the child from the harness, when the harness is in an open configuration.

12. A seat for a child, comprising the safety-harness of claim 11.
